# EUROPÄISCHE PATENTSCHRIFT

(11) **EP 2 302 249 B1**
(45) Veröffentlichungstag und Bekanntmachung des Hinweises auf die Patenterteilung: **15.05.2013**
(21) Anmeldenummer: 10009928.2
(22) Anmeldetag: 20.09.2010
(51) Int. Cl.: F16D 63/00, F16D 65/14, F16C 29/10

(54) **Brems- und/oder Klemmvorrichtung mit Druckübersetzer**
Braking and/or clamping device with pressure transformer
Dispositif de freinage et/ou de serrage doté d'un multiplicateur de pression

(30) Priorität: 20.09.2009 DE 102009041910
(43) Veröffentlichungstag der Anmeldung: 30.03.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 19 715 141
- DE-A1-102008 027 388
- DE-A1-102009 041 909
- DE-U1- 29 505 080

## Beschreibung

Die Erfindung betrifft eine Brems- und/oder Klemmvorrichtung eines an mindestens einer Führungsschiene geführten Schlittens, wobei die Vorrichtung wenigstens einen an die Führungsschiene mittels eines Hydraulikmediums anpressbare Reibbacken aufweist, wobei ferner die Vorrichtung zur Erzeugung des vom Hydraulikmedium übertragenen Drucks einen Druckübersetzer aufweist und wobei der Druckübersetzer einen in einem Primärzylinderraum angeordneten, pneumatisch angetriebenen Primärkolben hat, der mindestens einen das Hydraulikmedium unter Druck setzenden und haltenden Sekundärkolben trägt.

Aus der DE 295 05 080 U1 ist eine derartige Brems- und/oder Klemmvorrichtung bekannt. Der Druckübersetzer dieser Vorrichtung hat einen pneumatisch angetriebenen rotationssymmetrischen Primärkolben, an dem ein ebenfalls rotationssymmetrischer Sekundärkolben koaxial angeordnet ist. Die Kombination aus Primär- und Sekundärkolben sitzt quer zur Längsrichtung der zu bremsenden oder klemmenden Führungsschiene.

Der vorliegenden Erfindung liegt die Problemstellung zugrunde, eine Brems- und/oder Klemmvorrichtung zu entwickeln, die bei sehr großen Klemmkräften und kurzen Reaktionszeiten einen einfachen und bauraumsparenden Aufbau hat und zudem dauerhaft wartungsarm ist.

Diese Problemstellung wird mit den Merkmalen des Hauptanspruches gelöst. Dazu treffen die Mittellinien des oder der Sekundärkolben den Schwerpunkt der anzudichtenden Querschnittsfläche des Primärzylinderraumes nicht. Zudem ist die Summe der zweifachen größten Länge und der zweifachen größten Breite der Querschnittsfläche kleiner als der Umriss der Querschnittsfläche des Primärzylinderraumes.

Bei dieser Brems- und/oder Klemmvorrichtung wird z.B. die am Maschinentisch ortsfeste Schiene, an der der - die Vorrichtung tragende - Schlitten abgebremst oder festgeklemmt werden soll, von einem Grundkörper in Form einer c-förmigen Klammer bereichsweise umgriffen. Der Grundkörper ist hierbei direkt starr am Schlitten befestigt, so dass der Bremskraftfluss den kürzest möglichen Weg zwischen Maschinenbett und Schlitten hat.

Die Gesamtquerschnittsfläche des Primärzylinders ist nach dem Ausführungsbeispiel eine in der Ebene gelegene c- bzw. u-Form. Sie kann selbstverständlich die Form eines "L" haben bzw. winkelförmig ausgebildet sein. Ebenso ist eine z-förmige, sternoder ringförmige Fläche denkbar. Eine ringförmige Fläche muss nicht kreisringförmig geformt sein. Im Prinzip ist jede regelmäßig oder unregelmäßig begrenzte Querschnittsfläche denkbar, sofern beim theoretischen Abfahren bzw. Nachzeichnen oder Nachziehen des entsprechenden Querschnittumrisses die Nachziehrichtung sowohl positive als auch negative Richtungsänderungen erfährt.

Im Druckübersetzer wird als Hydraulikmedium beispielsweise ein Hydrauliköl mit der Bezeichnung Azolla ZS 46 des Schmierstoffherstellers Total^{®} verwendet. Es hat eine relativ hohe Viskosität von 46 mm²/s bei 40° Celsius. Das Hydraulikmedium kann aber auch ein Fett, ein Gel oder eine andere fließfähige, nahezu inkompressible Substanz sein.

Als unmittelbar auf die Führungsschiene wirkende Stellglieder können hydraulische Zylinder-Kolbeneinheiten, Membranzylinder oder eine Kombination hieraus verwendet werden. Alle hydraulischen Stellglieder; es können z.B. bis zu vier oder mehr pro Führungsschienenseitenanlage sein; werden für eine Betätigung in Klemmrichtung benutzt. Diese Stellglieder liegen sich in der Regel paarweise gegenüber.

Das pneumatische Stellglied des Druckübersetzers wird beispielsweise sowohl für die Be- als auch für die Entlastungsrichtung verwendet. Auch können gleich- oder verschiedenartige Stellglieder pro Belastungsrichtung hintereinander oder nebeneinander im oder am Gehäuse angeordnet werden.

Die gesamte Brems- und/oder Klemmvorrichtung hat im Querschnitt - also normal zur Führungslängsrichtung - eine Kontur, die problemlos innerhalb der Querschnittskontur der meisten handelsüblichen Führungswagen bleibt. Selbstverständlich kann die Brems- und/oder Klemmvorrichtung auch vollständig in einen Führungswagen oder in den Schlitten integriert werden. Auch kann die Vorrichtung als Notbremse eingesetzt werden.

Die Führungsschiene, an denen die Reibbacken der Vorrichtung zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden. Ferner ist die sich zwischen den Reibbacken und der Führungsschiene beim Bremsen oder Klemmen ergebende Kontaktstelle nicht auf eine Flächenberührung beschränkt, bei der das Längen-/Breitenverhältnis zur gleichen Größenordnung gehört. Ggf. sind auch Flächenberührungen denkbar, die an eine Linienberührung heranreichen.

Weitere Einzelheiten der Erfindung ergeben sich aus den Unteransprüchen und der nachfolgenden Beschreibung schematisch dargestellter Ausführungsformen.
- Figur 1:: Dimetrische Darstellung einer Brems- und/oder Klemmvorrichtung;
- Figur 2:: Explosionsdarstellung der Brems- und/oder Klemmvorrichtung;
- Figur 3:: zweifach abgewinkelter vertikaler Längsschnitt der Vorrichtung mit einem Schnittverlauf nach Figur 5;
- Figur 4:: Querschnitt zu Figur 1 mit einem Schnittverlauf nach Figur 3;
- Figur 5:: horizontaler Längsschnitt zu Figur 1 mit einem Schnittverlauf nach Figur 3;
- Figur 6:: vergrößerter, vertikaler Längsschnitt durch den Druckübersetzer, vgl. Figur 3;
- Figur 7:: vertikale Teilquerschnitte des Vorrichtungsgrund- körpers im Bereich des Grundkörperdeckels;
- Figur 8:: mittiger vertikaler Längsschnitt der Vorrichtung;
- Figur 9:: Teillängsschnitt zu Figur 1 des Vorrichtungsgrund- körpers;
- Figur 10:: Längsschnitt durch den Befüllstopfen vor der Befüllung;
- Figur 11:: Längsschnitt durch den Befüllstopfen nach der Befüllung;
- Figur 12:: wie Figur 3, jedoch mit unbetätigtem Federdruck- speicher;
- Figur 13:: wie Figur 5, jedoch mit betätigtem Federdruck- speicher;
- Figur 14:: wie Figur 4, jedoch mit Federdruckspeicher;
- Figur 15:: Vergrößerung des vertikalen Querschnitts durch ein Stellglieds nach Figur 4;
- Figur 16:: Vergrößerung der Gesamtquerschnittsfläche des Primärzylinderraumes.

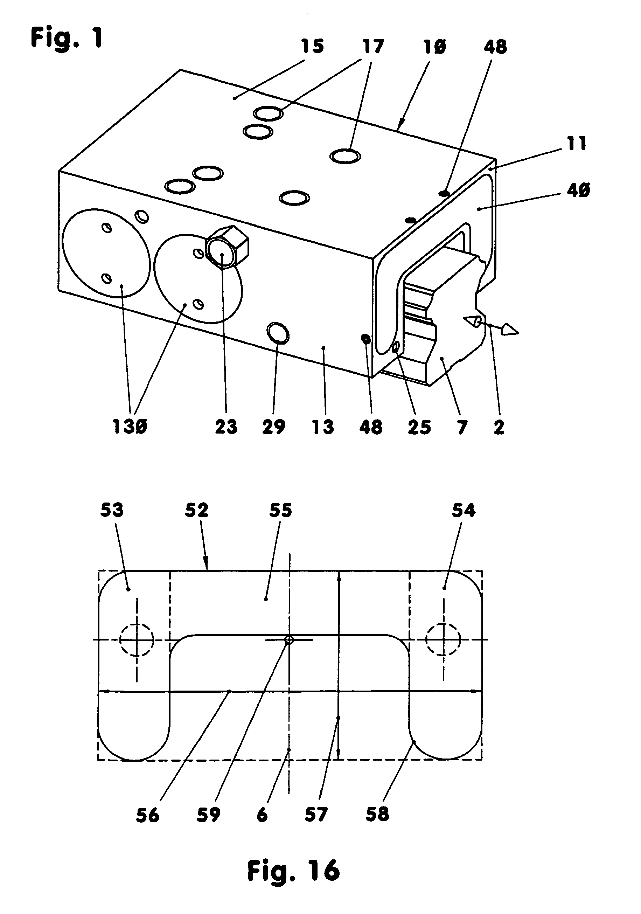

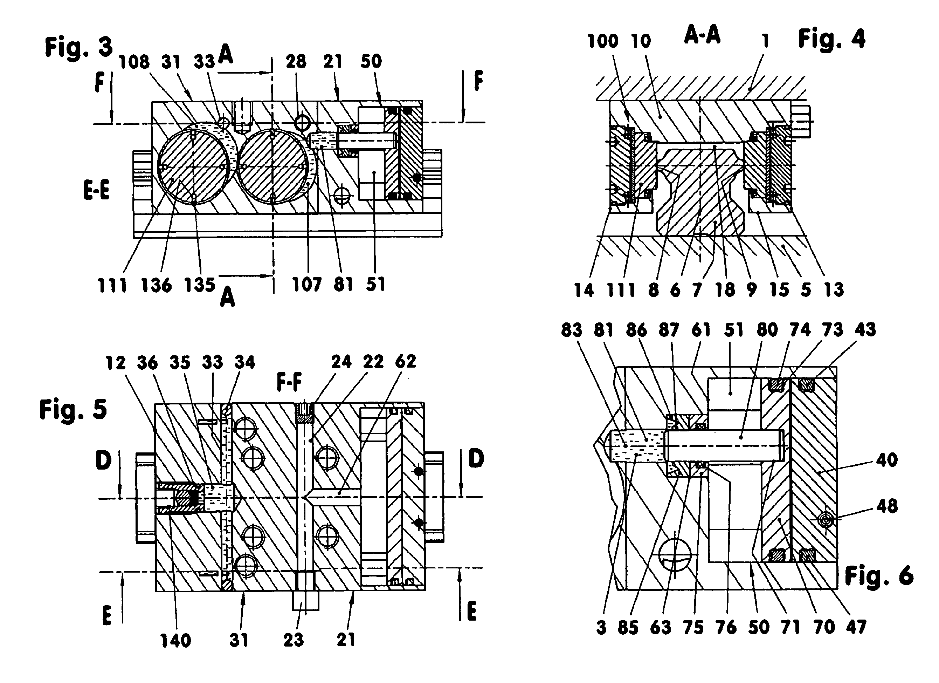

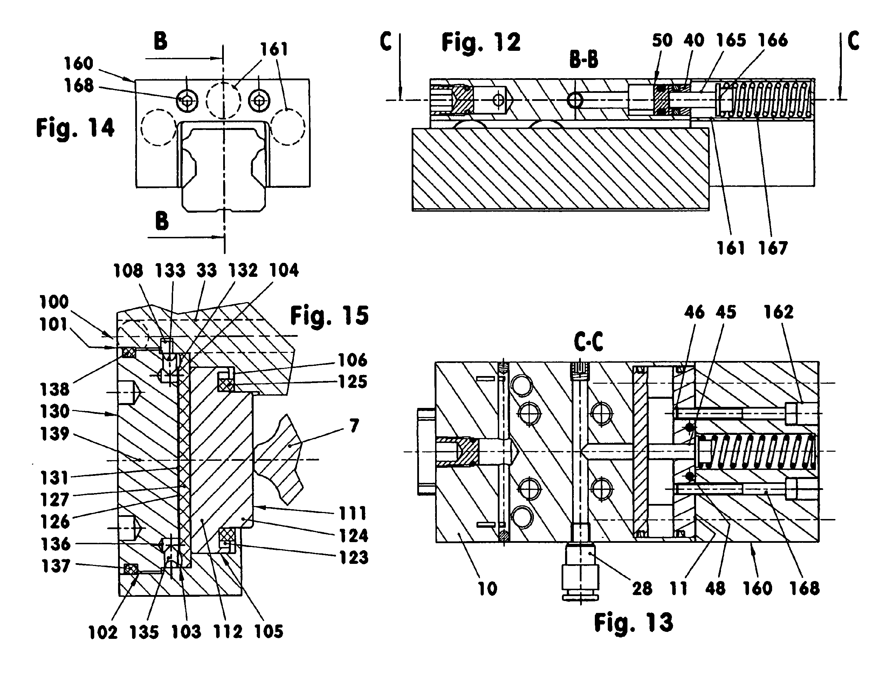

Die Figur 1 zeigt eine Brems- und/oder Klemmvorrichtung beispielsweise in ihrer Originalgröße. Die Vorrichtung umgreift mit ihrem c-förmigen Grundkörper (10) eine Führungsschiene (7). Der dargestellte Grundkörper (10) umfasst u.a. einen Druckübersetzer (50), vgl. Figur 6, mit einer pneumatischen Primärseite und einer hydraulischen Sekundärseite. Z.B. vier sekundäre Stellglieder (100) haben jeweils eine Reibbackenfunktion, vgl. Figur 14. Die Vorrichtung ist über den Grundkörper (10) an einem Schlitten (1) befestigt, der an der Führungsschiene (7) abgebremst oder geklemmt werden soll, vgl. Figur 4. Die Führungsschiene (7) verläuft parallel zur Schlittenbewegungsrichtung bzw. zur Führungslängsrichtung (2).

U.a. in den Figuren 1, 2 und 4 ist ein Abschnitt einer doppelprismatischen Führungsschiene (7) dargestellt. Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche z.B. das sie tragende Maschinenbett (5), vgl. Figur 4.

Die Führungsschiene (7) hat oberhalb der v-förmigen Nut u.a. zwei Nebenflächen (8, 9), die sich bezogen auf die vertikale Mittenlängsebene (6) spiegelbildlich gegenüber liegen. Beide Nebenflächen (8, 9) sind zueinander parallel ausgerichtet. Sie dienen den Reibbacken (111) als Anlageflächen. Demzufolge sind Nebenflächen, die gekrümmt sind oder jeweils aus einer Gruppe von Flächen zusammengesetzt werden, nur dann geeignet, wenn sie beim Aufbau der Vorrichtungsklemmkräfte keine Kraftresultierende erzeugen, die die Vorrichtung von der Führungsschiene (7) abhebt oder wegdrängt.

Der z.B. einteilige, aus 16 MnCr 5 gefertigte Grundkörper (10) ist im Wesentlichen ein quaderförmiges Bauteil, das an seiner Unterseite eine zentrale Nut (18) mit einem z.B. rechteckigen Querschnitt aufweist. In die Nut (18) taucht die Führungsschiene (7) nach Figur 4 zu ca. zwei Dritteln ein. Der Grundkörper hat beispielsweise folgende Abmessungen: 72 mm x 48 mm x 28, 5 mm.

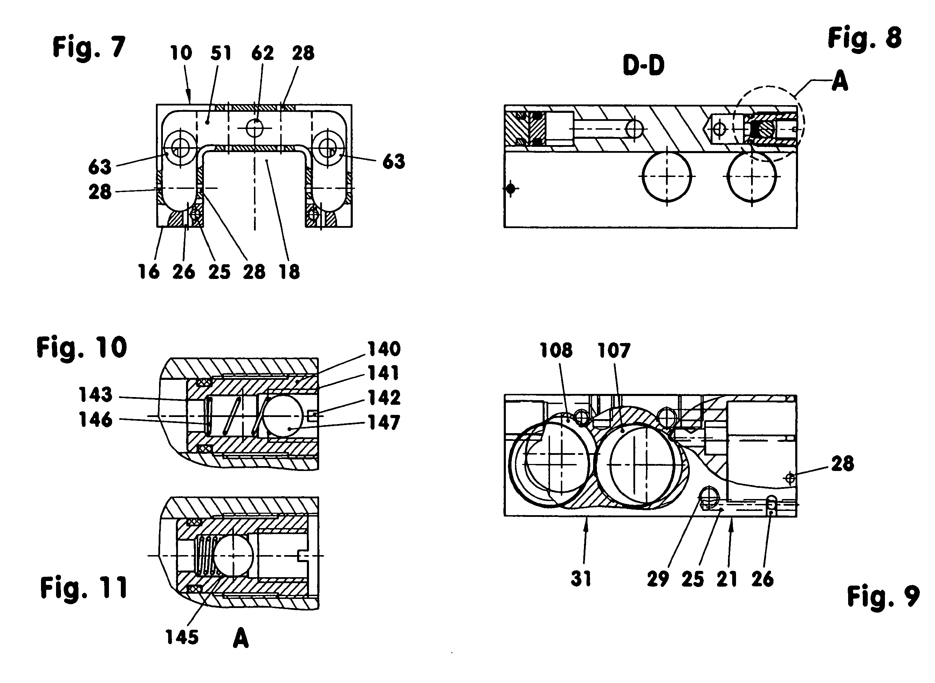

Der formsteife Grundkörper (10) mit seinen vielen Druckräumen und Druckkanälen ist in Führungslängsrichtung (2) in zwei größere Bereiche aufgeteilt: einen Antriebsbereich (21) und einen Abtriebsbereich (31), vgl. Figur 3 und 9. Der Antriebsbereich (21) umfasst großteils einen Druckübersetzer (50), während der Abtriebsbereich (31) die hydraulischen Reibgehemme (100) bzw. Stellglieder lagert.

Der Druckübersetzer (50) besteht grundkörperseitig aus einem Primärzylinderraum (51) und z.B. zwei Sekundärzylinderräumen (81). Der nichtzylindrische Primärzylinderraum (51), vgl. Figur 7, hat eine Querschnittsform, die einem auf dem Kopf stehenden U zumindest annähernd entspricht. Die Gesamtquerschnittsfläche (52), vgl. Figur 16, hat eine linke Teilfläche (53), eine rechte Teilfläche (54) und eine mittlere Teilfläche (55). Nach Figur 16 sind die theoretischen Teilflächen (53, 54, 55) im Bereich der kontaktierenden Konturen gestrichelt dargestellt. Die seitlichen Teilflächen (53, 54) haben eine Fläche von z.B. jeweils 200 mm², während die mittlere Teilfläche (55) eine Fläche von 228 mm² misst. Die seitlichen Teilflächen (53, 54) haben im unteren Bereich z.B. eine halbkreisförmige Kontur, deren Radius 4,25 mm beträgt. Die oberen, äußeren Ecken der Teilflächen (53, 54) haben einen Radius von 4,1 mm. An den Übergängen der Teilflächen (53, 54, 55), die im Bereich der Nut (18) liegen, befinden sich Außenradien mit einem Radius von 3 mm.

Die Gesamtquerschnittsfläche (52) hat eine größte Länge (56) von 45,5 mm. Die größte Breite (57) misst 23,5 mm. Zur Bestimmung der größten Länge (56) und der größten Breite (57) wird um die Gesamtquerschnittsfläche (52) das kleinstmögliche Rechteck gelegt. Die größten Längen (56) und die größten Breiten (57) entsprechen dann den jeweiligen Kantenlängen dieses Rechtecks.

Der Umfang der Gesamtquerschnittsfläche (52) beträgt beim Ausführungsbeispiel 198,6 mm. Sie hat einen Flächenschwerpunkt (59), der unterhalb der mittleren Teilfläche (55) liegt. Der Schwerpunkt (59) liegt also nicht auf der Gesamtquerschnittsfläche (52). Die Tiefe des Primärzylinderraumes (51) beträgt z.B. 17 mm.

Im Boden (61) des Primärzylinderraumes (51) befinden sich eine mittlere (62) und zwei äußere Bohrungen (63), deren Mittellinien normal zur Ebene des Bodens (61) ausgerichtet sind. Die mittlere Bohrung (62) trifft im Antriebsbereich (21) eine gasführende Querbohrung (22), die an jeder Seitenfläche (13, 14) endet. Dort ist in das einzelne, einen Gewindeanschluss darstellende Querbohrungsende, z.B. ein Stopfen (24), ein Anschlussadapter (29) oder ein Luftfilter (23) eingeschraubt.

Die äußeren Bohrungen (63) sind Stufenbohrungen, die u.a. als Sekundärzylinderräume dienen. Der jeweils vordere, dem Primärzylinderraum (51) zugewandte Bereich hat zur Lagerung von hydraulischen und pneumatischen Dichtungen (85, 76) einen größeren Durchmesser als der als Verdrängerraum (81) wirkende hintere Bereich, vgl. Figuren 3 und 6.

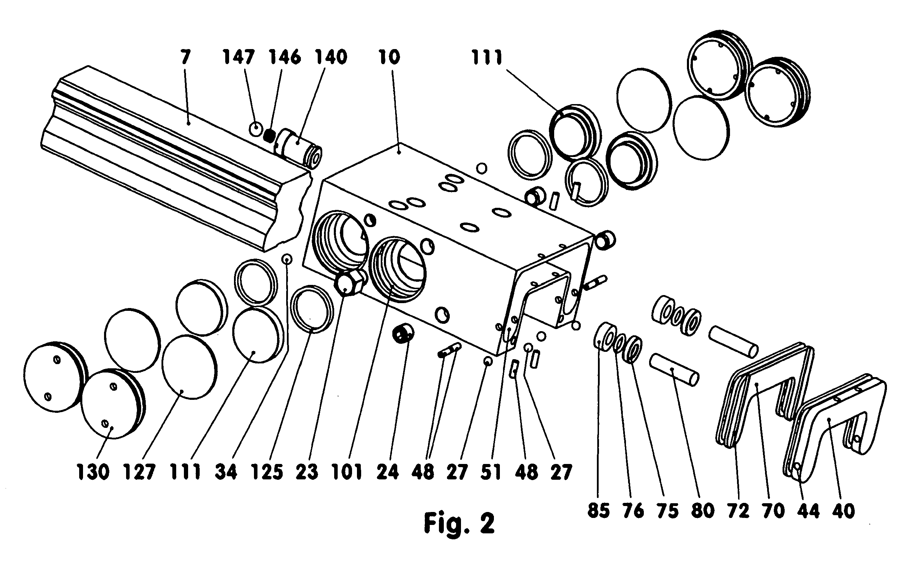

In der vorderen Stirnfläche (11) des Grundkörpers (10) befinden sich in den beiden durch die Grundkörperunterseite (16) und die Nut (18) gebildeten Ecken jeweils eine zur vorderen Stirnfläche (11) normale Längsbohrung (25), vgl. Figuren 7 und 9. Diese treffen jeweils auf eine kurze Querbohrung (26), die von der Unterseite (16) aus in den Primärzylinderraum (51) münden. Die vorderen Bereiche der einzelnen Bohrungen (25, 26) sind mittels eingestemmter Kugeln (27), vgl. Figur 2, dauerhaft gasdicht verschlossen.

Im Abtriebsbereich (31) befinden sich in jeder Seitenfläche (13, 14) zwei Stufenbohrungen (101) zur Aufnahme der Reibgehemme (100), vgl. Figur 14. Je zwei Stufenbohrungen (101) liegen pro Seitenfläche (13, 14) z.B. eng nebeneinander. Jede Stufenbohrung (101) hat drei Bereiche unterschiedlicher Durchmesser und Tiefe. Der erste Bereich ist der Deckelbereich (102). Er hat den größten Durchmesser der Stufenbohrung (101) und weist ein Innengewinde zum Fixieren eines Gehemmedeckels (130) auf. Der zweite und der dritte Bereich der Stufenbohrung (101) haben eine zylindrische Wandung. Der dritte Bereich ist hierbei der Reibbackenbereich (105). Er hat den kleinsten Durchmesser der Stufenbohrung (101). Er lagert - in Richtung seiner Mittellinie (139) - gleitfähig einen zumindest annähernd scheibenförmigen Reibbacken (111). Im zweiten Bereich, dem Membransitzbereich (103), ist eine kreisscheibenförmige Membrane (127) angeordnet. Dazu hat dieser Bereich - zum Reibbackenbereich (105) hin - einen planen Gehäusebund (104). Gegen diesen Gehäusebund (104) wird die Membrane (127) vom Gehemmedeckel (130) gepresst.

Die Stufenbohrungen (101), die im mittleren Bereich des Grundkörpers (10) angeordnet sind, haben sichelförmige Einfräsungen (107), die sich jeweils mit einem Sekundärzylinderraum (81) überschneiden, vgl. Figuren 3 und 9. Dazu befinden sich die - gegenüber der Stufenbohrung (101) um ca. 2,3 mm nach vorn versetzten - Einfräsungen (107) im vorderen bzw. äußeren Bereich des jeweiligen Membransitzbereiches (103) der Stufenbohrung (101). Auch die beiden hinteren Stufenbohrungen (101) haben derartige Einfräsungen (108). Allerdings sind sie gegenüber der jeweiligen Stufenbohrung (101) um ca. 45 Winkelgrade nach vorn und oben versetzt eingearbeitet. Diese Einfräsungen (108) schneiden zum einen die jeweils benachbarte Stufenbohrung (101) und zum anderen eine zwischen den Seitenflächen (13, 14) des Grundkörpers (10) gelegene Querbohrung (33). Beidseitig ist die Querbohrung (33) z.B. mit eingestauchten Kugeln (34) öldicht verschlossen, vgl. Figur 2.

Die Querbohrung (33) schneidet mittig eine in der vertikalen Mittenlängsebene (6) angeordnete Befüllbohrung (35). Die Befüllbohrung (37) endet an der hinteren Stirnfläche (12) des Grundkörpers (10) z.B. in einem M8x1-Gewindeanschluss (36). Im Gewindeanschluss (36) sitzt ein Befüllstopfen (140), vgl. auch Figur 11.

Der Scheibenfräser, mit dem diese Einfräsungen (107, 108) bearbeitet werden, hat einen Außendurchmesser, der z.B. 1 mm kleiner ist als der Innendurchmesser des Deckelbereiches (102) der Stufenbohrungen (101).

Auf der Oberseite des Grundkörpers (10) sind zur Befestigung der Vorrichtung am Schlitten (1) z.B. sechs Gewindebohrungen angeordnet.

Im Antriebsbereich (21) hat die Oberseite (15) - zur Befestigung eines Grundkörperdeckels (40) - zwei Durchgangsbohrungen (19), die bis zur Nut (18) reichen, vgl. Figur 7. Auch jede Seitenfläche (13, 14) hat eine derartige, die Nut (18) erreichende Durchgangsbohrung (19).

Der Primärzylinderraum (51) ist zur vorderen Stirnseite (11) hin mit dem c-förmigen Grundkörperdeckel (40) verschlossen. Der z.B. aus Kunststoff, z.B. einem PA6, gefertigte Grundkörperdeckel (40) ist im Wesentlichen eine quaderförmige Platte, aus der vom Rand aus mittig eine Nut mit zumindest annähernd rechteckigem Querschnitt eingearbeitet ist, vgl. Figur 2. Die Stirnfläche des Grundkörperdeckels (40) entspricht in Form und Größe zumindest annähernd der Gesamtquerschnittsfläche (52) des Primärzylinderraumes (51).

Zum Primärzylinderraum (51) hin versetzt hat der Grundkörperdeckel (40) eine umlaufende Dichtringnut (43), in der ein Dichtring (47) eingelegt und ggf. eingeklebt wird, vg1. Figur 8. Zwischen der Dichtringnut (43) und der vorderen Stirnfläche weist der Grundkörperdeckel (40) vier Querbohrungen (44) auf, vgl. Figur 2, die bei einem im Grundkörper (10) eingebauten Grundkörperdeckel (40) konzentrisch zu den entsprechenden Grundkörperbohrungen (19) positioniert sind.

Im Ausführungsbeispiel wird der im Grundkörper (10) positionierte Grundkörperdeckel (40) durch z.B. acht Federstifte (48) gehalten. Hierbei klemmen die Federstifte (48) sowohl in den Grundkörperbohrungen (19) als auch in den deckelseitigen Querbohrungen (44). Anstelle dieser Verstiftung kann der Grundkörperdeckel (40), nach dem Einsetzten des Primärkolbens (70), auch mit dem Grundkörper (10) verklebt oder laserverschweißt sein.

Zwischen der Innenseite des Grundkörperdeckels (40) und dem Boden des Primärzylinderraumes (51) ist der die Sekundärkolben (80) tragende Primärkolben (70) angeordnet. Letzterer ist aus dem universellen Gleitwerkstoff CuSn7ZnPb gefertigt und hat eine Gestalt, die zumindest annähernd mit der des Grundkörperdeckels (40) vergleichbar ist, vgl. Figur 2. Der z.B. 4 mm breite Primärkolben (70) hat eine mittig umlaufende Dichtlippennut (73), in der ein dichtender Quadring (74) eingesetzt und/oder eingeklebt ist. In seiner zum Grundkörperdeckel (40) hin orientierten Stirnfläche hat er zwei vertikal verlaufende Stirnflächennuten (72). Jede Stirnflächennut (72) ist mittig in seinen Seitenschenkeln angeordnet. Die Stirnflächennuten (72) fördern die Druckluftverteilung an der Primärkolbenvorderseite.

Auf der Rückseite des Primärkolbens (70) befinden sich zwei parallele Sacklochbohrungen (71), in denen je ein zylindrischer Sekundärkolben (80) eingepresst ist, vgl. Figur 3. Die Sekundärkolben (80) haben einen Durchmesser von z.B. 4 mm. Zur Fixierung im Primärkolben (70) kann dieser anstelle der Sacklochbohrungen (71) auch im Durchmesser kleinere Durchgangsbohrungen haben. In die Durchgangsbohrungen werden die Sekundärkolben (80) eingesteckt, um auf der Vorderseite des Primärkolbens (70) vernietet zu werden.

Die Sekundärkolben (80) ragen in unbetätigten Zustand so weit in die gestuften Sekundärzylinderraume (81) hinein, dass ihre hydraulisch aktiven Stirnseiten im jeweiligen Verdrängerraum liegen, vgl. Figur 6. Hierbei ist der Sekundärkolben (80) zum Primärkolben (70) hin über einen im vorderen Bereich der Stufenbohrung (63) in einem Stützring (75) angeordneten O-Ring (76) abgedichtet. Der O-Ring (76) sitzt in einer zentralen Ringnut des Stützringes (75). Letzterer ist in den vorderen Bohrungsbereich eingepresst. Zur Seite des Hydraulikmediums (3) hin sitzt neben dem Stützring (75) eine Nutringdichtung in Form einer Zweilippendichtung (85). Die Dichtlippen (86, 87) zeigen in Richtung Bohrungsgrund der Stufenbohrung (63). Die Zweilippendichtung (85) stützt sich ggf. axial am Stützring (75) ab.

In jeder Seitenfläche (13, 14) sitzen z.B. zwei in den Stufenbohrungen (101) angeordnete Stellglieder (100). Jedes als Reibgehemme ausgebildete Stellgliede (100) besteht neben der Stufenbohrung (101) aus einem Reibbacken (111), einer Membrane (127) und einem Gehemmedeckel (130).

Der kolbenartige Reibbacken (111) ist ein Drehteil, das aus einem aus der Stufenbohrung (101) herausragenden und in die Nut (18) hineinragenden Reibzapfen (124) und einem im Durchmesser größeren Druckzapfen (112) besteht. Zwischen dem Druckzapfen (112) und dem Reibzapfen (124) befindet sich ein z.B. planer Bund, in dem axial eine Ringnut (123) mit z.B. recht-eckigem Querschnitt eingearbeitet ist. In die Ringnut (123) ist ein elastischer Rückholring (125) eingelegt. Der Rückholring (125) hat bei einem E-Modul von ca. 7700 N/cm² eine Härte von ca. 96 Shore A. Er stützt den Reibbacken (111) am Gehäusebund (106) des Reibbackenbereiches (105) der Stufenbohrung (101) ab. Bei unbetätigtem Stellglied (100) schiebt der elastische Rückholring (125) den Reibbacken (111) gegen die Membrane (127). Die an der Membrane (127) anliegende Fläche des Druckzapfens (112) hat z.B. einen Durchmesser von 16,5 mm.

Die Stirnseite des in die Nut (18) hineinragenden Endes des Reibzapfens (124) ist ggf. mit Reibbelag ausgestattet.

Im Deckelbereich (102) der Stufenbohrung (101) sitzt über ein Feingewinde eingeschraubt der Gehemmedeckel (130), vgl. Figur 14. Dieser Gehemmedeckel (130) hat eine äußere plane Stirnseite, in der zwei Sacklochbohrungen zum Einschrauben mittels eines Zapfenschlüssels angeordnet sind. An diese Stirnseite schließt sich ein kurzer zylindrischer Außenabschnitt an, auf dem eine Außenringnut (137) zur Aufnahme eines Dichtringes (138) angeordnet ist. Der Dichtring (138) ist z.B. aus einem Nitril-Butadien-kautschuk (NBR) mit einer Härte von z.B. 90 Shore A nach DIN 53505 gefertigt. Ein alternativer Werkstoff ist Polyurethan.

Um die Dichtfunktion des Gehemmedeckels (130) zu verbessern, kann dieser an der entsprechenden Seitenfläche (13, 14) über einen Flansch anliegen. Ggf. werden für die Flanschanlage in den Seitenflächen (13, 14) entsprechende Zylindersenkungen eingearbeitet.

Die zur Membrane (127) hin orientierte innere Stirnseite weist eine innere kreisrunde Planfläche (131) auf, an die sich randseitig ein ringförmiger Steg (132) anschließt. Der ringförmige Steg (132) steht mindestens drei Zehntel - in Axialrichtung - über die Planfläche (131) über. Die Wölbung des Einzelquerschnittes des Steges (132) hat einen Krümmungsradius von z.B. 1,5 mm. Mit Hilfe des Stegs (132) wird die Membrane (127) gegen den mittleren Gehäusebund (104) gepresst.

In der radialen Außenfläche des Gehemmedeckels (130) befindet sich in der Nähe des Steges (132) ein umlaufender Ringkanal (133) mit einem z.B. halbkreisförmigen Querschnitt. Dieser Ringkanal (133) liegt in axialer Richtung - bezogen auf die Mittellinie (139) des Stellglieds (100) - auf der Höhe der sichelförmigen Einfräsung (108), vgl. auch Figur 3, hinteres bzw. linkes Stellglied (100). Diese Einfräsung (108) kommuniziert mit der Hydrauliköl führenden Querbohrung (33).

Vom Ringkanal (133) aus erstrecken sich z.B. vier radiale Sacklochbohrungen (135) in Richtung Mittellinie (139). Die Sacklochbohrungen (135) münden in kurze Querbohrungen (136). Letztere sind ebenfalls Sacklochbohrungen, die jedoch von der Planfläche (131) aus gebohrt sind. Sie befinden sich in unmittelbarer Nähe des Steges (132), vgl. auch Figur 2.

Zwischen dem Ringkanal (133) und der Außenringnut (137) befindet sich das Feingewinde, über das der Gehemmedeckel (130) im Grundkörper (10) eingeschraubt ist.

Die zwischen dem Gehemmedeckel (130) und dem Reibbacken (111) eingeklemmte Membrane (127) ist aus einem Nitril-Butadien-Kautschuk (NBR) mit einer Härte von z.B. 66 Shore A nach DIN 53505 hergestellt. Die im unverformten Zustand plane Membrane (127) hat z.B. einen Durchmesser von 19 mm und eine Stärke von 1 mm.

Soll die Brems- und/oder Klemmvorrichtung pneumatisch betätigt werden, um die Reibbacken (111) gegen die Führungsschiene (7) zu pressen, wird der Gewindeanschluss (29) mit Druckluft, z.B. 6 x 10⁵ Pa, beaufschlagt, vgl. Figur 9. Über die Längsbohrung (25) der Primärseite des Grundkörpers (10) gelangt die Druckluft vor den Primärkolben (70). Der sich nach den Figuren 3 und 6 nach links bewegende Primärkolben (70) schiebt die Sekundärkolben (80) in die Verdrängerräume (81) der ölführenden Sekundärseite. Die hinter dem Primärkolben (70) vorhandene Luft wird über die Bohrungen (22) und (62) z.B. zu einem Luftfilter (23) geführt und in die Umgebung abgeblasen. Die ölführenden Verdrängerräume (81) kommunizieren mit dem Einfräsungen (107, 108). Über letztere pflanzt sich der Hydraulikdruck bis vor die Membranen (127) der Reibgehemme (100) fort. Die Membranen (127) werden gegen die Reibbacken (111) gepresst. Sekundärseitig entsteht ein Hydraulikdruck von ca. 120 bis 150 x 10⁵ Pa.

Der zum Klemmen und/oder Bremsen erforderliche Hub der Reibbacken (111) beträgt bis zur Anlage an der Führungsschiene (7) im Regelfall ca. 0,1 mm. Die Reibbacken (111) treffen hierbei z.B. ca. mittig die Nebenflächen (8, 9) der Führungsschiene (7). Nach den Figuren 4 und 14 schneiden die Mittellinien (139) der Reibgehemme (100) somit die Nebenflächen (8,9) in deren mittleren Bereich. Der maximale Hub der Reibbacken (111) liegt z.B. bei 0,5 mm.

Die sich an der Führungsschiene (7) einstellende Klemmkraft erzeugt eine - in Führungslängsrichtung (2) orientierte -Haltekraft zwischen der Brems- und/oder Klemmvorrichtung und der Führungsschiene (7) von mehr als 1000 N.

Bei einem Entlüften des zwischen dem Grundkörperdeckel (40) und dem Primärkolben (70) gelegenen Gasdruckraumes schieben die Rückholringe (125) die Reibbacken (111) zurück und bringen die Membranen (127) wieder in ihre Ausgangslage. Dabei fährt der Primärkolben (70), angetrieben von den Sekundärkolben (80) in seine in den Figuren 3 und 6 gezeigte Ausgangsposition. Ggf. wird dieser Rückhub des Primärkolbens (70) mit Druckluft ausgelöst oder auch nur unterstützt. Dazu wird z.B. über den Gewindeanschluss (28) die Fremdluft in die Bohrungen (22) und (62) gefördert. Zudem können im Primärzylinderraum (51) zwischen dem Boden (61) und dem Primärkolben (70) auch Rückholfederelemente angeordnet sein. Beispielsweise werden Schraubendruckfedern an den Sekundärkolben (80) geführt.

Sekundärseitig fällt der Druck des Hydraulikmediums (3) nicht unter einen minimalen Grunddruck von 1,5 x 10⁵ Pa. Dieser Grunddruck, er liegt regulär bei 2 x 10⁵ Pa, gewährleistet zum einen, dass die äußeren Dichtlippen (86) der Zweilippendichtung (85) stets in den Verdrängerräumen (81) an den radialen Wandungen der Stufenbohrungen (63) des Grundkörpers (10) fest anliegen und zum anderen, dass die inneren Dichtlippen (87) die Sekundärkolben (80) immer spielfrei umgreifen. Durch die sichere Anlage der Dichtlippen (86, 87) verkürzt sich die Ansprechzeit der Vorrichtung beim Klemmen. Auch minimiert diese Maßnahme den regulären Hydraulikölverlust.

Um den Grunddruck im Grundkörper (10) sicherzustellen, wird ein Befüllstopfen (140) benutzt, der von der hinteren Stirnfläche (12) aus zugänglich ist. Der Befüllstopfen (140) ist eine Hülse, die beispielsweise nahezu vollständig in den Gewindeanschluss (36) des Grundkörpers (10) eingeschraubt ist, vgl. u.a. Figuren 8, 10 und 11. Der Befüllstopfen (140) hat hier eine zentrale Stufenbohrung (143), deren einzelne Abschnitte einen umso kleineren Querschnitt haben, je weiter sie von der Stirnfläche (141) entfernt liegen. Im vorderen Abschnitt befindet sich eine Kugel (147), die an einer im mittleren Abschnitt gelegenen Schraubenfeder (146) abstützt. Die Schraubenfeder (146) liegt in der Stufenbohrung (143) am Bund eines hinteren Abschnitts an. In der vorderen Stirnfläche (141) hat der Befüllstopfen (140) z.B. einen Schlitz (142), um den Befüllstopfen (140) in den Gewindeanschluss (36) z.B. mittels eines Schraubendrehers nach DIN 5265 A einschrauben und justieren zu können.

Zum Befüllen der das Hydraulikmedium (3) führenden Druckräume (81, 126) und Druckkanäle (33, 35) wird in die Befüllbohrung (35) des im Grundkörper (10) eingeschraubten Befüllstopfens (140) das Hydraulikmedium z.B. unter Druck eingefüllt. Das Hydraulikmedium strömt an der von der Schraubendruckfeder (146) abgestützten Kugel (147) vorbei in die Bohrungen (35) und (33).

Nach einem Verstauchen der Kugel (147) im mittleren Abschnitt (145) der Stufenbohrung (143) wird der Befüllstopfen (140) zur Einjustieren des Grunddruckes in das Feingewinde des Gewindeanschlusses (36) tiefer eingeschraubt, vgl. Figur 11. Da sich pro Stellglied (100) die grunddruckbedingte Kraft des Druckzapfens (112) mit der Rückstellkraft des Rückholringes (125) im Gleichgewicht steht, kann durch ein Nachstellen des Befüllstopfens (140) - und eine sich damit ergebende Änderung des Grunddruckes - das Lüftspiel zwischen den Druckzapfen (111) und der Führungsschiene (7) fein dosiert eingestellt werden. Auf diese Weise lässt sich - neben einem Druckmittelverlust - auch ein an den Nebenflächen (7, 8) der Führungsschiene (7) auftretender Verschleiß zumindest teilweise ausgleichen.

In den Figuren 12 bis 14 wird eine Brems- und/oder Klemmvorrichtung dargestellt, die beispielsweise für Notbremsungen und/oder -klemmungen vorgesehen ist. Hierfür ist an der vorderen Stirnfläche (11) des Grundkörpers (10) eine Federspeichereinheit (160) montiert. Die Federspeichereinheit (160), die zumindest annähernd die Querschnittsumrisse des Grundkörpers (1C) aufweist, hat z.B. drei Speicherbohrungen (161), zur Aufnahme von Federelementen (167), und zwei Befestigungsbohrungen (162). Nach Figur 14 liegen die beiden in den Schenkeln der Federspeichereinheit (160) gelegenen Speicherbohrungen (161) in der Verlängerung der Sekundärkolben (80).

Im Grundkörperdeckel (40) sind drei von der Stirnseite aus gebohrte Durchgangsbohrungen (45) und zwei Gewindebohrungen (46) vorhanden. Alle Bohrungen (45, 46, 161, 162) haben Mittellinien, die parallel zur Führungslängsrichtung (2) orientiert sind. Über die Gewindebohrungen (46) wird die Federspeichereinheit (160) mittels der Schrauben (168) am Grundkörperdeckel (40) befestigt.

In jeder Durchgangsbohrung (25) des Grundkörperdeckels (40) sitzt gleitgelagert ein Federkolben (165). Der Federkolben (165) ragt mit einem Federteller (166) in die entsprechend zugehörige Speicherbohrung (161) hinein.

Zwischen dem Federteller (166) und dem Grund der Speicherbohrung (161) ist als Federelement (167), z.B. eine Schraubendruckfeder, angeordnet, vgl. Figuren 12 und 13. Anstelle einer einzelnen Schraubendruckfeder (167) kann auch ein System oder eine Gruppe von Federelementen verwendet werden, z.B. eine Gruppierung von teils gestapelten und/ oder dicht gepackten Tellerfedern. Jedes Federelement (167) oder System aus Federn hat bei betätigter Brems- und/oder Klemmvorrichtung, vgl. Figur 13, noch eine Federkraft von z.B. mindestens 125 N.

Zum Entlasten bzw. Öffnen der Brems- und/oder Klemmvorrichtung, also zum Spannen der Federelemente (167), wird über den Anschlussadapter (28) an der Rückseite des Primärkolbens (51) Druckluft angelegt.

Ggf. kann der Grundkörperdeckel (40) in die Federspeichereinheit (160) integriert werden, so dass letzterer nur mittels der Federstifte (48) am Grundkörper (10) befestigt wird. Die Speicherbohrungen (161) werden in diesem Fall außenseitig z.B. mit Schraubdeckeln verschlossen.

### Bezugszeichenliste:

- 1: Schlitten
- 2: Führungslängsrichtung, Schlittenbewegung
- 3: Hydraulikmedium, Hydrauliköl
- 5: Maschinenbett
- 6: vertikale Mittenlängsebene
- 7: Schiene, Führungsschiene
- 8, 9: Nebenflächen

- 10: Grundkörper, c- bzw. u-förmig
- 11: Stirnfläche, vorn
- 12: Stirnfläche, hinten
- 13, 14: Seitenflächen
- 15: Oberseite
- 16: Unterseite
- 17: Befestigungsbohrungen
- 18: Nut, zentral
- 19: Durchgangsbohrungen für (48)

- 21: Antriebsbereich
- 22: Querbohrung, gasführend
- 23: Luftfilter
- 24: Stopfen
- 25: Längsbohrungen
- 26: Querbohrungen, kurz
- 27: Kugeln
- 28: Gewindeanschluss, Anschlussadapter (lösen)
- 29: Gewindeanschluss (klemmen)

- 31: Abtriebsbereich
- 33: Querbohrung, Druckkanal
- 34: Kugeln
- 35: Befüllbohrung, Druckkanal
- 36: Gewindeanschluss

- 40: Grundkörperdeckel
- 43: Dichtringnut
- 44: Querbohrungen für Stifte
- 45: Durchgangsbohrung für (160)
- 46: Gewindebohrung für (160)
- 47: Dichtring, Quadring
- 48: Stifte, Federstifte

- 50: Druckübersetzer
- 51: Primärzylinderraum
- 52: Gesamtquerschnittsfläche
- 53: Teilfläche, links, seitlich
- 54: Teilfläche, rechts, seitlich
- 55: mittlere Teilfläche

- 56: Länge, größte
- 57: Breite, größte
- 58: Umriss
- 59: Flächenschwerpunkt, Schwerpunkt

- 61: Boden
- 62: mittlere Bohrung
- 63: äußere Bohrungen, Stufenbohrungen

- 70: Primärkolben, c- bzw. u-förmig
- 71: Sacklochbohrungen
- 72: Stirnflächennuten
- 73: Dichtlippennut
- 74: Dichtring im Kolben, Quadring
- 75: Stützring
- 76: Dichtring, O-Ring, pneumatische Dichtung

- 80: Sekundärkolben
- 81: Verdrängerraum, Druckraum, Sekundärzylinder
- 83: Mittellinien
- 85: Dichtung, sekundärseitig, Doppellippendichtung, hydraulische Dichtung
- 86: Dichtlippe, radial außen,
- 87: Dichtlippe, radial innen

- 100: Stellglied, Reibgehemme
- 101: Stufenbohrungen
- 102: Deckelbereich
- 103: Membransitzbereich
- 104: Gehäusebund, Mitte
- 105: Reibbackenbereich
- 106: Gehäusebund, vorn
- 107: Einfräsungen, Mitte
- 108: Einfräsungen, hinten

- 111: Reibbacken
- 112: Druckzapfen
- 123: Ringnut
- 124: Reibzapfen
- 125: Rückholring, Elastomerring
- 126: Druckraum
- 127: Membrane

- 130: Gehemmedeckel, Schraubdeckel
- 131: Planfläche
- 132: Steg, ringförmig
- 133: Ringkanal, umlaufend
- 135: Sacklochbohrungen
- 136: Querbohrungen
- 137: Außenringnut für O-Ring
- 138: Dichtring
- 139: Mittellinien

- 140: Befüllstopfen, Stopfen
- 141: Stirnfläche
- 142: Werkzeugadapterstruktur
- 143: Durchgangsbohrung, Stufenbohrung
- 145: Sitzbereich, mittlerer Abschnitt von (143)
- 146: Schraubendruckfeder
- 147: Verschließglied, Kugel

- 160: Federspeichereinheit
- 161: Speicherbohrungen
- 162: Befestigungsbohrungen

- 165: Federkolben
- 166: Federteller
- 167: Federelemente, Schraubendruckfedern
- 168: Schrauben

## Patentansprüche

1. Brems- und/oder Klemmvorrichtung eines an mindestens einer Schiene (7) geführten Schlittens (1),
- wobei die Vorrichtung wenigstens einen an die Schiene (7) mittels eines Hydraulikmediums (3) anpressbaren Reibbacken (111) aufweist und
- wobei die Vorrichtung zur Erzeugung des vom Hydraulikmedium (3) übertragenen Drucks einen Druckübersetzer (50) aufweist und
- wobei der Druckübersetzer (50) einen in einem Primärzylinderraum (51) angeordneten, pneumatisch angetriebenen Primärkolben (70) hat, der mindestens einen das Hydraulikmedium (3) unter Druck setzenden Sekundärkolben (80) trägt, **dadurch gekennzeichnet,**
- **dass** die Mittellinien (83) des oder der Sekundärkolben (80) den Schwerpunkt (59) der abzudichtenden Gesamtquerschnittsfläche (52) des Primärzylinderraumes (51) nicht treffen und
- **dass** die Summe der zweifachen größten Länge (56) und der zweifachen größten Breite (57) der Gesamtquerschnittsfläche (52) kleiner ist als der Umriss (58) der Gesamtquerschnittsfläche (52).

2. Vorrichtung gemäß Anspruch 1, **dadurch gekennzeichnet, dass** der Schwerpunkt (59) der durch den Primärkolben (70) abzudichtende Gesamtquerschnittsfläche (52) nicht in dieser Gesamtquerschnittsfläche (52) liegt.

3. Vorrichtung gemäß Anspruch 1, **dadurch gekennzeichnet, dass** der Primärkolben (70) zwei Sekundärkolben (80) trägt.

4. Vorrichtung gemäß Anspruch 3, **dadurch gekennzeichnet, dass** der Schwerpunkt (59) der Gesamtquerschnittsfläche (52) eine Strecke halbiert, an deren beiden Enden je ein Punkt liegt, in dem eine Mittellinie (83) eines Sekundärkolbens (80) die Gesamtquerschnittsfläche (52) schneidet.

5. Vorrichtung gemäß Anspruch 1, **dadurch gekennzeichnet, dass** jeder Reibbacken (111) ein Teil eines Stellgliedes (100) ist, dessen Druckraum (126) zwischen einer Membrane (127) und einem Gehemmedeckel (130) liegt.

6. Vorrichtung gemäß Anspruch 1, **dadurch gekennzeichnet, dass** die Membrane (127) - im unbelasteten Zustand - eine plane Elastomerscheibe ist.

## Claims

1. Braking and/or clamping apparatus for a slide (1) guided along at least one rail (7), said apparatus comprising
- at least one friction jaw (111) adapted to be urged against rail (7) by hydraulic medium (3) and
- a pressure intensifier (50) for generating the pressure transmitted by said hydraulic medium (3),
- said pressure intensifier (50) including a pneumatically powered primary piston (70) disposed within a primary cylinder cavity (51) and supporting at least one secondary piston (80) pressurizing said hydraulic medium (3),
**characterized in that**
- centre line(s) (83) of secondary piston or pistons (80) do not meet the centre of gravity (59) of the total cross-sectional area (52) to be sealed of primary cylinder cavity (51), and **in that**
- the sum total of twice the maximum length (56) and twice the maximum width (57) of total cross-sectional area (52) is shorter than the perimeter (58) of total cross-sectional area (52).

2. Apparatus as claimed in claim 1, **characterized in that** the centre of gravity (59) of the total cross-sectional area (52) to be sealed by primary piston (70) is not located within the said total cross-sectional area (52).

3. Apparatus as claimed in claim 1, **characterized in that** primary piston (70) supports a pair of secondary pistons (80).

4. Apparatus as claimed in claim 3, **characterized in that** the centre of gravity (59) of total cross-sectional area (52) bisects a line segment having at each of both ends thereof a point in which a centre line (83) of secondary piston (80) intersects the total cross-sectional area (52).

5. Apparatus as claimed in claim 1, **characterized in that** each friction jaw (111) is part of an actuator (100) of which the pressure cavity (126) is located between a diaphragm (127) and a lid (130) over the restraining mechanism.

6. Apparatus as claimed in claim 1, **characterized in that**, in its unladed condition, diaphragm (127) comprises a planar elastomeric disk.

## Revendications

1. Dispositif de freinage et/ou de serrage d'un chariot (1) guidé sur au moins un rail (7),
- le dispositif présentant au moins une mâchoire à friction (111) qui peut s'appliquer sur le rail (7) par le biais d'un fluide hydraulique (3) et
- le dispositif présentant un multiplicateur de pression (50) destiné à produire la pression transmise par le fluide hydraulique (3) et
- le multiplicateur de pression (50) ayant un piston primaire (70) à commande pneumatique placé dans une chambre de cylindre primaire (51) qui porte au moins un piston secondaire (80) qui met le fluide hydraulique (3) sous pression,
**caractérisé en ce**
- **que** les lignes médianes (83) du ou des piston/s secondaire/s (80) ne touchent pas le centre de gravité (59) de la surface totale de section (52) à étancher de la chambre du cylindre primaire (51) et
- **que** la somme du double de la plus grande longueur (56) et du double de la plus grande largeur (57) de la surface totale de section (52) est plus petite que le contour (58) de la surface totale de section (52).

2. Dispositif selon la revendication 1, **caractérisé en ce que** le centre de gravité (59) de la surface totale de section (52) à étancher par le piston primaire (70) ne se trouve pas à l'intérieur de cette surface totale de section (52).

3. Dispositif selon la revendication 1, **caractérisé en ce que** le piston primaire (70) porte deux pistons secondaires (80).

4. Dispositif selon la revendication 3, **caractérisé en ce que** le centre de gravité (59) de la surface totale de section (52) partage en deux une distance qui présente à chacune des deux extrémités un point dans lequel une ligne médiane (83) d'un piston secondaire (80) coupe la surface totale de section (52).

5. Dispositif selon la revendication 1, **caractérisé en ce que** chaque mâchoire à friction (111) fait partie d'un élément de réglage (100) dont la chambre de pression (126) est située entre une membrane (127) et un couvercle d'un dispositif de blocage (130).

6. Dispositif selon la revendication 1, **caractérisé en ce qu'**à l'état non sollicité, la membrane (127) est un disque plan en élastomère.
